(19) Europäisches Patentamt / European Patent Office / Office européen des brevets

(11) **EP 4 263 701 B1**

(12) **EUROPEAN PATENT SPECIFICATION**

(45) Date of publication and mention
of the grant of the patent:
**09.10.2024   Bulletin 2024/41**

(51) International Patent Classification (IPC):
***C08L 23/08*** *(2006.01)*

(21) Application number: **21843842.2**

(52) Cooperative Patent Classification (CPC):
(C-Sets available)
**C08L 23/08;** C08L 2205/025                    (Cont.)

(22) Date of filing: **16.12.2021**

(86) International application number:
**PCT/US2021/063796**

(87) International publication number:
**WO 2022/140153 (30.06.2022 Gazette 2022/26)**

(54) **POLYETHYLENE COMPOSITIONS FOR CLOSURE APPLICATIONS**

POLYETHYLENZUSAMMENSETZUNGEN FÜR VERSCHLUSSANWENDUNGEN

COMPOSITIONS DE POLYÉTHYLÈNE POUR DES APPLICATIONS DE FERMETURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **21.12.2020   US 202063128245 P**

(43) Date of publication of application:
**25.10.2023   Bulletin 2023/43**

(73) Proprietor: **Dow Global Technologies LLC
Midland, MI 48674 (US)**

(72) Inventors:
• **LU, Keran**
  **Freeport, Texas 77541 (US)**
• **COOPER, Russell T.**
  **Freeport, Texas 77541 (US)**
• **ANSARI, Mubashir Qamar**
  **Midland, Michigan 48667 (US)**
• **ZHANG, Fengyi**
  **Lake Jackson, Texas 77566 (US)**

(74) Representative: **Beck Greener LLP
Fulwood House
12 Fulwood Place
London WC1V 6HR (GB)**

(56) References cited:
**EP-A1- 2 931 807      WO-A1-2016/075163**

(52)  Cooperative Patent Classification (CPC): (Cont.)

C-Sets
**C08L 23/08, C08L 23/08**

## Description

### FIELD

Embodiments of the present disclosure generally relate to polyethylene compositions for use in injection molding, and specifically, polyethylene compositions for use in injection molding to make caps or closures.

### BACKGROUND

Polypropylene (PP) has traditionally been used in injection molding processes, particularly, to manufacture large injection molded parts, such as large diameter closures, because of its relative ease of processing. Additionally, it is widely available and historically had favorable economics relative to polyethylene when utilized to these ends. It has recently become more desirable to avoid using different polymers for packaging solutions. For example, manufacturing a bottle from polyethylene and a closure from polypropylene does not allow for the entire package (bottle and closure) to be easily recycled with reduced contamination. Traditional polyethylene formulations often do not suit the molding of large diameter or high aspect-ratio closures because of unbalanced shrinkage in the direction parallel and normal to the melt flow direction, henceforth referred to as shrinkage anisotropy. EP2931807A1 discloses polyethylene compositions suitable for the manufacture of caps and closures. When traditional polyethylene formulations are used, high can shrinkage anisotropy results, which often leads to part warpage. In packaging, part warpage may result in poor application performance, such as badly fitted caps.

Accordingly, alternative polyethylene compositions having reduced shrinkage anisotropy may be desired.

### SUMMARY

Disclosed in embodiments herein are polyethylene compositions suitable for use in injection molding. The polyethylene compositions comprise: from 2 wt.% to 25 wt.% of a high molecular weight component consisting of an ethylene/alpha-olefin copolymer, wherein the high molecular weight component has a density of from 0.910 g/cc to 0.971 g/cc, a melt index (I2.16) of greater than 0.5 g/10 min to less than 1.5 g/10 min, a molecular weight distribution (Mw/Mn) of 6.0 to 20.0; from 75 wt.% to 98 wt.% a low molecular weight component consisting of an ethylene homopolymer or an ethylene/alpha-olefin copolymer, wherein the ethylene homopolymer or an ethylene/alpha-olefin copolymer has a density from 0.920 g/cc to 0.971 g/cc, a melt index (I2.16) from 5.0 g/10 min to 120 g/10 min, and a molecular weight distribution (Mw/Mn) of less than 6.0; wherein the polyethylene composition has a shrinkage anisotropy ($MD_{shrink}/TD_{shrink}$) that is less than a shrinkage anisotropy ($MD_{shrink}/TD_{shrink}$) of the low molecular weight component, wherein $MD_{shrink}$ is the machine direction total shrinkage and $TD_{shrink}$ is the transverse direction total shrinkage.

Also disclosed in embodiments herein are injection molded articles or closures formed from polyethylene compositions. The polyethylene compositions comprise: from 2 wt.% to 25 wt.% of a high molecular weight component consisting of an ethylene/alpha-olefin copolymer, wherein the high molecular weight component has a density of from 0.910 g/cc to 0.971 g/cc, a melt index (I2.16) of greater than 0.5 g/10 min to less than 1.5 g/10 min, a molecular weight distribution (Mw/Mn) of 6.0 to 20.0; from 75 wt.% to 98 wt.% a low molecular weight component consisting of an ethylene homopolymer or an ethylene/alpha-olefin copolymer, wherein the ethylene homopolymer or an ethylene/alpha-olefin copolymer has a density from 0.920 g/cc to 0.971 g/cc, a melt index (I2.16) from 5.0 g/10 min to 120 g/10 min, and a molecular weight distribution (Mw/Mn) of less than 6.0; wherein the polyethylene composition has a shrinkage anisotropy ($MD_{shrink}/TD_{shrink}$) that is less than a shrinkage anisotropy ($MD_{shrink}/TD_{shrink}$) of the low molecular weight component, wherein $MD_{shrink}$ is the machine direction total shrinkage and $TD_{shrink}$ is the transverse direction total shrinkage.

Further disclosed in embodiments herein are methods of manufacturing injection molded articles or closures from polyethylene compositions. The methods comprise providing a polyethylene composition, and injection molding the polyethylene composition to form an article or closure. The polyethylene compositions comprise: from 2 wt.% to 25 wt.% of a high molecular weight component consisting of an ethylene/alpha-olefin copolymer, wherein the high molecular weight component has a density of from 0.910 g/cc to 0.971 g/cc, a melt index (I2.16) of greater than 0.5 g/10 min to less than 1.5 g/10 min, a molecular weight distribution (Mw/Mn) of 6.0 to 20.0; from 75 wt.% to 98 wt.% a low molecular weight component consisting of an ethylene homopolymer or an ethylene/alpha-olefin copolymer, wherein the ethylene homopolymer or an ethylene/alpha-olefin copolymer has a density from 0.920 g/cc to 0.971 g/cc, a melt index (I2.16) from 5.0 g/10 min to 120 g/10 min, and a molecular weight distribution (Mw/Mn) of less than 6.0; wherein the polyethylene composition has a shrinkage anisotropy ($MD_{shrink}/TD_{shrink}$) that is less than a shrinkage anisotropy ($MD_{shrink}/TD_{shrink}$) of the low molecular weight component, wherein $MD_{shrink}$ is the machine direction total shrinkage and $TD_{shrink}$ is the transverse direction total shrinkage.

In one or more embodiments herein, the high molecular weight component has a number average molecular weight, Mn, of greater than 11,000 g/mol, as determined by conventional gel permeation chromatography; a high load melt index (I21.6) from 45 g/10 min to 90 g/10 min; a weight average molecular weight, Mw, of from 90,000 g/mol to less than 175,000 g/mol, as determined by conventional gel permeation chromatography; and/or combinations thereof.

In addition to the high molecular weight component, in one or more embodiments herein, the low molecular weight component has a number average molecular weight, Mn, of less than 11,000 g/mol, as determined by conventional gel permeation chromatography; a weight average molecular weight, Mw, of less than 90,000 g/mol, as determined by conventional gel permeation chromatography; and/or combinations thereof.

In addition to the high molecular weight component and the low molecular weight component, in one or more embodiments herein, the overall density of the polyethylene composition is 0.930 g/cc to 0.967 g/cc; the overall melt index (I2.16) of the polyethylene composition is 2.0 g/10 min to 115 g/ 10 min; and/or combinations thereof.

In one or more embodiments herein, the shrinkage anisotropy ($MD_{shrink}/TD_{shrink}$) of the polyethylene composition is at least 0.10 less than a shrinkage anisotropy ($MD_{shrink}/TD_{shrink}$) ratio of the low molecular weight component.

Additional features and advantages of the embodiments will be set forth in the detailed description which follows, and in part will be readily apparent to those skilled in the art from that description or recognized by practicing the embodiments described herein, including the detailed description and the claims. It is to be understood that both the foregoing and the following description describe various embodiments and are intended to provide an overview or framework for understanding the nature and character of the claimed subject matter.

## DETAILED DESCRIPTION

Reference will now be made in detail to embodiments of polyethylene compositions comprising a high molecular weight component and a low molecular weight component, methods of making the same, and articles made therefrom. As used herein, "polyethylene" refers to copolymerized monomers of ethylene and, optionally, one or more alpha-olefin comonomers, wherein the ethylene comprises a majority weight percent (greater than 50 weight percent). In all embodiments herein, the high molecular weight component has a higher weight average molecular weight than the low molecular weight component. The polyethylene compositions described herein may be used to produce injection molded articles, such as closures. It is noted, however, that this is merely an illustrative implementation of the embodiments disclosed herein. The embodiments are applicable to other technologies that are susceptible to similar problems as those discussed above. For example, the polyethylene compositions may also be used in large part injection molded durable item applications, which are clearly within the purview of the present embodiments.

High Molecular Weight Component

In embodiments herein, the polyethylene composition comprises from 2 wt.% to 25 wt.% of the high molecular weight component. All individual values and subranges of 2 wt.% to 25 wt.% are included and disclosed herein. For example, in some embodiments, the polyethylene composition comprises from 5 wt.% to 25 wt.% of the high molecular weight component. In other embodiments, the polyethylene composition comprises from 2 wt.%, 5 wt.%, or 10 wt.% to 20 wt.% of the high molecular weight component.

The high molecular weight component consists of an ethylene/alpha-olefin copolymer. As used herein, "ethylene/alpha-olefin copolymer" refers to a polymer comprising repeating units derived from ethylene and at least one alpha-olefin comonomer. The ethylene comprises a majority weight percent (greater than 50 wt.%, alternatively, greater than 70 wt.%, 75 wt.%, 80 wt.%, 85 wt.%, or 90 wt.%) of the copolymer. The alpha-olefin comonomer may have no more than 20 carbon atoms. For example, the alpha-olefin comonomers may have 3 to 10 carbon atoms or 3 to 8 carbon atoms. Exemplary alpha-olefin comonomers may include, but are not limited to, propylene, 1-butene, 1-pentene, 1-hexene, 1-heptene, 1-octene, 1-nonene, 1-decene, and 4-methyl-1-pentene. In some embodiments, the alpha-olefin comonomers are selected from the group consisting of propylene, 1-butene, 1-hexene, and 1-octene. In other embodiments, the alpha-olefin comonomers are selected from the group consisting of 1-hexene and 1-octene. The ethylene/alpha-olefin copolymer may comprise less than 50 wt.% (alternatively, less than 30 wt.%, 25 wt.%, 20 wt.%, 15 wt.%, or 10 wt.%) of the alpha-olefin comonomer.

The density of the high molecular weight component is from 0.910 g/cc to 0.971 g/cc. All individual values and subranges of 0.910 to 0.971 g/cc are included and disclosed herein. For example, in some embodiments, the density of the high molecular weight component may range from a lower limit of 0.910, 0.920, 0.930, 0.940, 0.945, or 0.950 g/cc to an upper limit of 0.971, 0.968, or 0.963 g/cc. In other embodiments, the density of the high molecular weight component is from 0.940 to 0.971, 0.968, or 0.963 g/cc. In further embodiments, the density of the high molecular weight component is from 0.950 to 0.971, 0.968, or 0.963 g/cc. Densities disclosed herein for ethylene-based polymers are determined according to ASTM D-792.

In addition to the density, the melt index ($I_{2.16}$) of the high molecular weight component is from greater than 0.5 g/10 min to less than 1.5 g/10 min. All individual values and subranges of greater than 0.5 g/10 min to less than 1.5 g/10 min are included and disclosed herein. For example, in some embodiments, the melt index ($I_{2.16}$) of the high molecular weight component is from 0.6 g/10 min to less than 1.5 g/10 min. In other embodiments, the melt index ($I_{2.16}$) of the high molecular weight component is from 0.6 g/10 min to 1.3 or 1.1 g/10 min. In further embodiments, the melt index ($I_{2.16}$) of the high molecular weight component is from 0.7 g/10 min to 1.3 or 1.1 g/10 min. Melt index, or $I_{2.16}$, for ethylene-based polymers is determined according to ASTM D1238 at 190°C, 2.16 kg.

In addition to the density and melt index ($I_{2.16}$), the molecular weight distribution (Mw/Mn) of the high molecular weight component is from 6.0 to 20.0. Molecular weight distribution may also be referred to as the polydispersity index (PDI) and is the ratio of Mw/Mn, wherein Mw is the weight average molecular weight and Mn is the number average molecular weight. All individual values and subranges of from 6.0 to 20.0 are included and disclosed herein. For example, in some embodiments, the molecular weight distribution (Mw/Mn) of the high molecular weight component from 6.0 to 18.0, 15.0, 13.0, or 11.0. In other embodiments, the molecular weight distribution (Mw/Mn) of the high molecular weight component from 7.0 to 18.0, 15.0, 13.0, or 11.0. In further embodiments, the molecular weight distribution (Mw/Mn) of the high molecular weight component from 8.0 to 18.0, 15.0, 13.0, or 11.0. Mw and Mn may be determined using conventional gel permeation chromatography (GPC).

In addition to the density, melt index ($I_{2.16}$), and the molecular weight distribution, in one or more embodiments herein, the high load melt index ($I_{21.6}$) of the high molecular weight component may be from 45 g/10 min to 90 g/10 min. All individual values and subranges of 45 g/10 min to 90 g/10 min are included and disclosed herein. For example, in some embodiments, the high load melt index ($I_{21.6}$) of the high molecular weight component is from 45 g/10 min to 80, 70, or 61 g/10 min. In other embodiments, the high load melt index ($I_{21.6}$) of the high molecular weight component is from 47 g/10 min to 80, 70, or 61 g/10 min. In further embodiments, the high load melt index ($I_{21.6}$) of the high molecular weight component is from 53 g/10 min to 80, 70, or 61 g/10 min. High load melt index, or $I_{21.6}$, for ethylene-based polymers is determined according to ASTM D1238 at 190°C, 21.6 kg.

In addition to the density, melt index ($I_{2.16}$), high load melt index ($I_{21.6}$), and the molecular weight distribution, in one or more embodiments herein, the high molecular weight component may have a number average molecular weight, Mn, of greater than 11,000 g/mol. All individual values and subranges of greater than 11,000 g/mol are included and disclosed herein. For example, in some embodiments, the number average molecular weight, Mn, of the high molecular weight component is from greater than 11,000 g/mol to 35,000 g/mol. In other embodiments, the number average molecular weight, Mn, of the high molecular weight component is from greater than 11,000 g/mol to 25,000 g/mol. In further embodiments, the number average molecular weight, Mn, of the high molecular weight component is from greater than 11,000 g/mol to 20,000 g/mol.

In addition to the density, melt index ($I_{2.16}$), high load melt index ($I_{21.6}$), the molecular weight distribution, and the Mn, in one or more embodiments herein, the high molecular weight may have a weight average molecular weight, Mw, of from 90,000 g/mol to less than 175,000 g/mol.. All individual values and subranges of from 90,000 g/mol to less than 175,000 g/mol are included and disclosed herein. For example, in some embodiments, the weight average molecular weight, Mw, of the high molecular weight component is from 90,000 g/mol to 175,000, 150,000, or 140,000 g/mol.

Low Molecular Weight Component

In embodiments herein, the polyethylene composition also comprises from 75 wt.% to 98 wt.% a low molecular weight component. All individual values and subranges of 75 wt.% to 98 wt.% are included and disclosed herein. For example, in some embodiments, the polyethylene composition comprises from 75 wt.% to 95 wt.% of the low molecular weight component. In other embodiments, the polyethylene composition comprises from 80, 90, or 95 wt.% to 98 wt.% of the high molecular weight component.

In embodiments herein, the low molecular weight component may be an ethylene homopolymer or an ethylene/alpha-olefin copolymer. In some embodiments, the low molecular weight component is an ethylene homopolymer. "Ethylene homopolymer" refers to a polymer that consists essentially of repeating units derived from ethylene. In some examples, an ethylene homopolymer contains at least 99 percent by weight of ethylene units, at least 99.5% by weight of ethylene units, at least 99.8% by weight of ethylene units, or at least 99.9% by weight of ethylene units. In other embodiments, the low molecular weight component is an ethylene/alpha-olefin copolymer, as previously described herein. In some embodiments, the high molecular weight component is an ethylene/alpha-olefin copolymer and the low molecular weight component is an ethylene homopolymer. In other embodiments, the high molecular weight component is an ethylene/alpha-olefin copolymer and the low molecular weight component is an ethylene/alpha-olefin copolymer.

In embodiments herein, the density of the low molecular weight component may range from 0.920 g/cc to 0.971 g/cc. All individual values and subranges of 0.920 to 0.971 g/cc are included and disclosed herein. For example, in some embodiments, the density of the low molecular weight component may range from a lower limit of 0.920, 0.930, 0.940, 0.945, or 0.950 g/cc to an upper limit of 0.971, 0.968, 0.965, or 0.963 g/cc. In other embodiments, the density of the low molecular weight component is from 0.945 to 0.971, 0.968, 0.965, or 0.963 g/cc. In further embodiments, the density of the low molecular weight component is from 0.950 to 0.971, 0.968, 0.965, or 0.963 g/cc. The density of the low molecular weight component may be measured according to ASTM D792 or calculated from the following equation (I):

$$(I) \quad \frac{1}{\text{Density (EBR)}} = \frac{\text{Weight Fraction (A)}}{\text{Density (A)}} + \frac{\text{Weight Fraction (B)}}{\text{Density (B)}}$$

wherein "A" is the high molecular weight component, "B" is the low molecular weight component, and "EBR" is the polyethylene composition. In some embodiments herein, the high molecular weight component has a density that is at least 0.005g/cc higher than the low molecular weight component.

In addition to the density, the melt index ($I_{2.16}$) of the low molecular weight component is from 5.0 g/10 min to 120 g/10 min. All individual values and subranges of 5.0 g/10 min to 120 g/10 min are included and disclosed herein. For example, in some embodiments, the melt index ($I_{2.16}$) of the low molecular weight component is from 5.0 or 9.0 g/10 min to 120, 110, 75, or 70 g/10 min. In other embodiments, the melt index ($I_{2.16}$) of the low molecular weight component is from 15.0 g/10 min to 110, 95, or 75 g/10 min. In further embodiments, the melt index ($I_{2.16}$) of the low molecular weight component is from 20.0 g/10 min to 120, 100, 75 or 70 g/10 min. Melt index, or $I_{2.16}$, for ethylene-based polymers is determined according to ASTM D1238 at 190°C, 2.16 kg.

In addition to the density and melt index ($I_{2.16}$), the molecular weight distribution (Mw/Mn) of the low molecular weight component is less than 6.0. All individual values and subranges of less than 6.0 are included and disclosed herein. For example, in some embodiments, the molecular weight distribution (Mw/Mn) of the low molecular weight component from 3.0 to less than 6.0. In other embodiments, the molecular weight distribution (Mw/Mn) of the low molecular weight component from 3.0 to 5.8 or 5.5. In further embodiments, the molecular weight distribution (Mw/Mn) of the low molecular weight component from 3.0 to 5.3 or 5.0.

In addition to the density, melt index ($I_{2.16}$), and the molecular weight distribution, in one or more embodiments herein, the low molecular weight component may have a number average molecular weight, Mn, of less than 11,000 g/mol. All individual values and subranges of less than 11,000 g/mol are included and disclosed herein. For example, in some embodiments, the number average molecular weight, Mn, of the low molecular weight component is from 5,000 g/mol to less than 11,000 g/mol. In other embodiments, the number average molecular weight, Mn, of the low molecular weight component is from 8,000 g/mol to less than 11,000 g/mol.

In addition to the density, melt index ($I_{2.16}$), the molecular weight distribution, and the Mn, in one or more embodiments herein, the low molecular weight may have a weight average molecular weight, Mw, of less than 90,000 g/mol.. All individual values and subranges of less than 90,000 g/mol are included and disclosed herein. For example, in some embodiments, the weight average molecular weight, Mw, of the low molecular weight component is from 30,000 g/mol to less than 90,000, 80,000, or 70,000 g/mol. In other embodiments, the weight average molecular weight, Mw, of the low molecular weight component is from 35,000 g/mol to less than 90,000, 80,000, or 70,000 g/mol.

Polyethylene Composition

In embodiments herein, polyethylene composition has a shrinkage anisotropy ($MD_{shrink}/TD_{shrink}$) that is less than a shrinkage anisotropy ($MD_{shrink}/TD_{shrink}$) of the low molecular weight component, wherein $MD_{shrink}$ is the machine direction total shrinkage (also referred to as total shrinkage in a direction parallel to the melt flow direction) and $TD_{shrink}$ is the transverse direction total shrinkage (also referred to as total shrinkage in a direction normal to the melt flow direction). $MD_{shrink}$ and $TD_{shrink}$ are measured according to ISO 294-4: 2018. In other embodiments, the polyethylene composition has a shrinkage anisotropy ($MD_{shrink}/TD_{shrink}$) that is at least 0.1 less than a shrinkage anisotropy ($MD_{shrink}/TD_{shrink}$) of the low molecular weight component.

In addition to the shrinkage anisotropy, in one or more embodiments herein the polyethylene composition may have an overall density ranging from 0.930 to 0.967 g/cc. All individual values and subranges of 0.930 to 0.967 g/cc are included and disclosed herein. For example, in some embodiments, the polyethylene composition has an overall density ranging from 0.935 to 0.967, 0.965, 0.960, or 0.955 g/cc. In other embodiments, polyethylene composition has an overall density ranging from 0.940 to 0.967, 0.965, 0.960, or 0.955 g/cc. In further embodiments, the polyethylene composition has an overall density ranging from 0.945 to 0.967, 0.965, 0.960, or 0.955 g/cc. The overall density can be measured or calculated as previously described herein.

In embodiments herein, the polyethylene composition has an overall melt index (I2.16) ranging from 2.0 g/10 min to 115 g/10 min. All individual values and subranges of 2.0 g/10 min to 115 g/10 min are included and disclosed herein. For example, in some embodiments, the polyethylene composition has an overall melt index ($I_{2.16}$) ranging from 2.0 g/10 min to 100, 65, or 40 g/10 min. In other embodiments, the polyethylene composition has an overall melt index ($I_{2.16}$) ranging from 5.0 g/10 min to 115, 100, 65, or 40 g/10 min. In further embodiments, the polyethylene composition has an overall melt index ($I_{2.16}$) ranging from 10.0 g/10 min to 115, 100, 65, or 40 g/10 min.

The polyethylene compositions described herein may contain one or more additives. Suitable additives may include, but are not limited to, processing aids, acid neutralizers, UV stabilizers, hydro peroxide decomposers, alkyl radical scavengers, hindered amine stabilizers, multifunctional stabilizers, phosphites, antioxidants, process stabilizers, metal de-activators, additives to improve oxidative or chlorine resistance, pigments or colorants, nucleating agents, fatty acid stearates, fluoroelastomers, fillers, and combinations thereof.

In embodiments herein, the polyethylene composition can be made by a variety of methods. For example, such methods may include, but are not limited to, gas phase polymerization process, slurry phase polymerization process, liquid phase polymerization process, and combinations thereof using one or more conventional reactors, e.g. fluidized bed gas phase reactors, loop reactors, stirred tank reactors, batch reactors in parallel, series, and/or any combinations thereof. For example, the polyethylene composition may be produced via gas phase polymerization process in a gas phase reactor; however, the instant invention is not so limited, and any of the above polymerization processes may be employed. In some embodiments, the polymerization reactor may comprise of two or more reactors in series, parallel, or combinations thereof, and wherein each polymerization takes place in solution, in slurry, or in the gas phase. In some embodiments, a dual reactor configuration is used where the polymer made in the first reactor can be either the high molecular weight component or the low molecular weight component. The polymer made in the second reactor may have a density and melt flow rate such that the overall density and melt flow rate of the polyethylene composition are met. Similar polymerization processes are described in, for example, WO 2004/101674A, which is incorporated herein by reference.

In embodiments herein, a method of manufacturing a polyethylene composition may comprise polymerizing a high molecular weight component, as previously described herein, in a reactor, and polymerizing a low molecular weight component, as previously described herein, in a different reactor, thereby producing a polyethylene composition. The two reactors may be operated in parallel. In some embodiments, the high molecular weight component is polymerized in a first reactor, and the low molecular weight component is polymerized in a second reactor. In other embodiments, the low molecular weight component is polymerized in a first reactor, and the high molecular weight component is polymerized in a second reactor.

In one or more embodiments herein, the high molecular weight component is manufactured using at least one chromium oxide catalyst. Chromium oxide catalysts useful in producing the polyethylene composition according to the embodiments disclosed herein include those disclosed in U.S. Pat. No. 4,011,382, the disclosure of which is incorporated herein by reference in its entirety. Such chromium oxide ($CrO_3$) based catalysts may be formed by depositing a suitable chromium compound, titanium compound, and optionally a fluorine compound on a dried support, and then activating the resulting composition by heating it in air or oxygen at a temperature of 300° C. to 900° C., for at least 2 hours. Chromium compounds which may be used include $CrO_3$ and other chromium containing compounds which are convertible to $CrO_3$ under the catalyst preparation conditions, including for example, chromic acetyl acetonate, chromic nitrate, chromic acetate, chromic chloride, chromic sulfate, and ammonium chromate. Other chromium compounds include those disclosed in U.S. Pat. Nos. 2,825,721 and 3,622,521, the disclosures of which are incorporated herein by reference in their entireties. In some embodiments, the chromium oxide catalyst comprises from greater than zero to 2.5 weight percent of fluorine. All individual values and subranges from greater than zero to 2.5 weight percent fluorine are included herein and disclosed herein; for example, when present, the fluorine may be from a lower limit of 0.01, 0.1, 0.5, 1, 1.5, 2, or 2.25 weight percent to an upper limit of 0.1, 0.5, 1, 1.5, 2, or 2.5 weight percent based on the total weight of the support and the catalyst. The chromium oxide based catalyst may have from 0.05 to 3.0 weight percent chromium based on the total weight of the support and the catalyst. All individual values and subranges from 0.05 to 3.0 weight percent are included herein and disclosed herein; for example, the amount of chromium may be from a lower limit of 0.05, 0.1, 0.5, 1, 1.5, 2, or 2.5 weight percent to an upper limit of 0.1, 0.5, 1, 1.5, 2, 2.5, or 3.0 weight percent based on the total weight of the support and the catalyst. The chromium oxide based catalyst may have from 1.5 to 9.0 weight percent titanium based on the total weight of the support and the catalyst. All individual values and subranges from 1.5 to 9.0 weight percent are included herein and disclosed herein; for example, the amount of titanium may be from a lower limit of 1.5, 2.5, 3.5, 4.5, 6.5, 7.5, or 8.5 weight percent to an upper limit of 2, 3, 4, 5, 6, 7, 8, or 9 weight percent based on the total weight of the support and the catalyst. Examples of chromium oxide catalysts include the UCAT™ B catalysts, available from Univation Technologies (Houston, TX).

In production, a chromium oxide catalyst (as described herein), ethylene, optionally one or more alpha-olefin comonomers, hydrogen, optionally O2, optionally one or more inert gases and/or liquids, e.g. N2, isopentane, hexane, and optionally one or more continuity additives, e.g. ethoxylated stearil amine are continuously fed into a reactor, e.g. a fluidized bed gas phase reactor. The reactor may be in fluid communication with one or more discharge tanks, surge tanks, purge tanks, and/or recycle compressors. The temperature in the reactor is typically in the range of 70 to 115° C., preferably 75 to 110° C., more preferably 75 to 100° C., and the pressure is in the range of 15 to 30 atmospheres (atm), preferably 17 to 26 atm. In general, the reactor temperature is operated at the highest temperature that is feasible, taking into account the sintering temperature of the polymer within the reactor and fouling that may occur in the reactor or recycle line(s). In order to maintain an adequate catalyst productivity in the present invention, it is preferable that the ethylene is present in the reactor at a partial pressure at or greater than 160 psia (1100 kPa), or 190 psia (1300 kPa), or 200 psia (1380 kPa), or 210 psia (1450 kPa), or 220 psia (1515 kPa). Hydrogen gas may also be added to the polymerization reactor(s) to control the final properties (e.g., I21 and/or I2). A distributor plate at the bottom of the polymer bed provides a uniform flow of the upflowing monomer, comonomer, inert gases stream. A mechanical agitator may also be provided to provide contact between the solid particles and the comonomer gas stream. The fluidized bed, a vertical cylindrical reactor, may have a bulb shape at the top to facilitate the reduction of gas velocity; thus, permitting the granular polymer to separate from the upflowing gases. The unreacted gases are then cooled to remove the heat of polymerization, recompressed, and then recycled to the bottom of the reactor. Once the residual hydrocarbons are removed, and the resin is transported under N2 to a purge bin, moisture may be introduced to reduce the presence of any residual catalyzed reactions with O2 before the inventive polyethylene composition is exposed to oxygen. The high molecular weight component may be transferred to an extruder to be pelletized. Such pelletization techniques are generally known.

In one or more embodiments herein, the low molecular weight component is manufactured using at least one Ziegler-Natta (Z-N) catalyst system. The term "procatalyst" or "precursor", are used interchangeably herein, and denote a compound comprising a ligand, a transition metal, and optionally, an electron donor. The procatalyst may further undergo halogenation by contacting with one or more halogenating agents. A procatalyst can be converted into a catalyst upon activation. Such catalysts are commonly referred to as Ziegler-Natta catalysts. Suitable Zeigler-Natta catalysts are known in the art and include, for example, the catalysts taught in U.S. Patent Nos. 4,302,565; 4,482,687; 4,508,842; 4,990,479; 5,122,494; 5,290,745; and, 6,187,866 B 1, the disclosures of which are hereby incorporated by reference. Other examples of Ziegler-Natta Catalysts include the UCAT™ J catalysts, available from Univation Technologies (Houston, TX). The collection of catalyst components, such as procatalyst(s), cocatalyst(s), is referred to as a catalyst system.

The transition metal compound of the procatalyst composition can comprise compounds of different kinds. The most usual are titanium compounds--organic or inorganic--having an oxidation degree of 3 or 4. Other transition metals such as, vanadium, zirconium, hafnium, chromium, molybdenum, cobalt, nickel, tungsten and many rare earth metals are also suitable for use in Ziegler-Natta catalysts. The transition metal compound is usually a halide or oxyhalide, an organic metal halide or purely a metal organic compound. In the last-mentioned compounds, there are only organic ligands attached to the transition metal.

The procatalyst can have the formula $Mg_d Me(OR)_e X_f(ED)_g$ wherein R is an aliphatic or aromatic hydrocarbon radical having 1 to 14 carbon atoms or COR' wherein R' is a aliphatic or aromatic hydrocarbon radical having 1 to 14 carbon atoms; each OR group is the same or different; X is independently chlorine, bromine or iodine; ED is an electron donor; d is 0.5 to 56; e is 0, 1, or 2; f is 2 to 116; and g is > 1 to 1.5(d). Me is a transition metal selected from the group of titanium, zirconium, hafnium and vanadium. Some specific examples of suitable titanium compounds are: $TiCl_3$, $TiCl_4$, $Ti(OC_2H_5)_2Br_2$, $Ti(OC_6H_5)Cl_3$, $Ti(OCOCH_3)Cl_3$, $Ti(acetylacetonate)_2Cl_2$, $TiCl_3(acetylacetonate)$, and $TiBr_4$. $TiCl_3$ and $TiCl_4$ are preferred titanium compounds.

The magnesium compounds include magnesium halides such as $MgCl_2$, $MgBr_2$, and $MgI_2$. Anhydrous $MgCl_2$ is a preferred compound. Other compounds useful in the invention are $Mg(OR)_2$, $Mg(OCO_2Et)$ and MgRCl where R is defined above. About 0.5 to about 56, and preferably about 1 to about 20, moles of the magnesium compounds are used per mole of transition metal compound. Mixtures of these compounds may also be used.

The procatalyst compound can be recovered as a solid using techniques known in the art, such as precipitation of the procatalyst or by spray drying, with or without fillers. Spray drying is a particularly preferred method for recovery of the procatalyst compound. Spray drying is taught in U.S. Pat. 5,290,745 and is hereby incorporated by reference. A further procatalyst comprising magnesium halide or alkoxide, a transition metal halide, alkoxide or mixed ligand transition metal compound, an electron donor and optionally, a filler can be prepared by spray drying a solution of said compounds from an electron donor solvent.

The electron donor is typically an organic Lewis base, liquid at temperatures in the range of about 0° C to about 200° C, in which the magnesium and transition metal compounds are soluble. The electron donor can be an alkyl ester of an aliphatic or aromatic carboxylic acid, an aliphatic ketone, an aliphatic amine, an aliphatic alcohol, an alkyl or cycloalkyl ether, or mixtures thereof, each electron donor having 2 to 20 carbon atoms. Among these electron donors, the preferred are alkyl and cycloalkyl mono-ethers having 2 to 20 carbon atoms; dialkyl, diaryl, and alkylaryl ketones having 3 to 20 carbon atoms; and alkyl, alkoxy, and alkylalkoxy esters of alkyl and aryl carboxylic acids having 2 to 20 carbon atoms. Mono-ether is defined herein as a compound that contains only one ether functional group in the molecule. For ethylene homo and co-polymerization, the most preferred electron donor is tetrahydrofuran. Other examples of suitable electron donors are methyl formate, ethyl acetate, butyl acetate, ethyl ether, dioxane, din-propyl ether, dibutyl ether, ethanol, 1-butanol, ethyl formate, methyl acetate, ethyl anisate, ethylene carbonate, tetrahydropyran, and ethyl propionate.

While an excess of electron donor may be used initially to provide the reaction product of transition metal compound and electron donor, the reaction product finally contains about 1 to about 20 moles of electron donor per mole of transition metal compound and preferably about 1 to about 10 moles of electron donor per mole of transition metal compound. The ligands comprise halogen, alkoxide, aryloxide, acetylacetonate and amide anions.

Partial activation of the procatalyst can be carried out prior to the introduction of the procatalyst into the reactor. The partially activated catalyst alone can function as a polymerization catalyst but at greatly reduced and commercially unsuitable catalyst productivity. Complete activation by additional cocatalyst is required to achieve full activity. The complete activation occurs in the polymerization reactor via addition of cocatalyst.

The catalyst procatalyst can be used as dry powder or slurry in an inert liquid. The inert liquid is typically a mineral oil. The slurry prepared from the catalyst and the inert liquid has a viscosity measured at 1 sec$^{-1}$ of at least 500 cp at 20°C. Examples of suitable mineral oils are the Kaydol and Hydrobrite mineral oils from Crompton.

In one embodiment in a polymerization process, the procatalyst undergo in-line reduction using reducing agent(s). The procatalyst is introduced into a slurry feed tank; the slurry then passes via a pump to a first reaction zone immediately downstream of a reagent injection port where the slurry is mixed with the first reagent, as described below. Optionally, the mixture then passes to a second reaction zone immediately downstream of a second reagent injection port where it is mixed with the second reagent (as described below) in a second reaction zone. While only two reagent injection and reaction zones are described above, additional reagent injection zones and reaction zones may be included, depending on the number of steps required to fully activate and modify the catalyst to allow control of the specified fractions of the polymer molecular weight distribution. Means to control the temperature of the catalyst procatalyst feed tank and the individual mixing and reaction zones are provided.

Depending on the activator compound used, some reaction time may be required for the reaction of the activator compound with the catalyst procatalyst. This is conveniently done using a residence time zone, which can consist either of an additional length of slurry feed pipe or an essentially plug flow holding vessel. A residence time zone can be used for both activator compounds, for only one or for neither, depending entirely on the rate of reaction between activator compound and catalyst procatalyst.

Exemplary in-line reducing agents are aluminum alkyls and aluminum alkyl chlorides of the formula $AlR_xCl_y$ where X+Y=3 and y is 0 to 2 and R is a C1 to C14 alkyl or aryl radical. Such in-line reducing agents include those listed in the following table:

| Reducing Agents | Reducing Agents |
|---|---|
| Diethylaluminum chloride | Triethylaluminum (TEAL) |
| Ethylaluminum dichloride | Trimethylaluminum |
| di-isobutyaluminum chloride | Triisobutylaluminum |
| dimethylaluminum chloride | Tri-n-hexylaluminum |
| Methylaluminum sesquichloride | Tri-n-octylaluminum |
| Ethylaluminum sesquichloride | Dimethylaluminum chloride |

The entire mixture is then introduced into the reactor where the activation is completed by the cocatalyst. Additional reactors may be sequenced with the first reactor, however, catalyst is typically only injected into the first of these linked, sequenced reactors with active catalyst transferred from a first reactor into subsequent reactors as part of the polymer thus produced.

The cocatalysts, which are reducing agents, conventionally used are comprised of aluminum compounds, but compounds of lithium, sodium and potassium, alkaline earth metals as well as compounds of other earth metals than aluminum are possible. The compounds are usually hydrides, organometal or halide compounds. Conventionally, the cocatalysts are selected from the group comprising Al-trialkyls, Al-alkyl halides, Al-alkyl alkoxides and Al-alkyl alkoxy halides. In particular, Al-alkyls and Al-alkyl chlorides are used. These compounds are exemplified by trimethylaluminum, triethylaluminum, tri-isobutylaluminum, tri-n-hexylaluminum, dimethylaluminum chloride, diethylaluminum chloride, ethylaluminum dichloride and diisobutylaluminum chloride, isobutylaluminum dichloride and the like. Butyllithium and dibutylmagnesium are examples of useful compounds of other metals.

The polyethylene compositions described herein can be used to manufacture an injection molded article, or one or more components of an injection molded article. Injection molding also includes injection blow molding or injection stretch blow molding. Injection molded articles may include, for example, closures, caps, large part closures, or hinged closures.

In embodiments herein, the polyethylene compositions described herein may be particularly well-suited for use in manufacturing a shaped article or one or more components of a shaped article. In some embodiments, the polyethylene compositions described herein may be particularly well-suited for use in manufacturing closures. In other embodiments, the polyethylene compositions described herein may be particularly well-suited for use in manufacturing large part closures. In further embodiments, the polyethylene compositions described herein may be particularly well-suited for use in manufacturing large part closures suitable for detergent, cosmetic products, tissue, and/or beverage applications.

**TEST METHODS**

Unless otherwise stated, the following test methods are used in the examples.

Density

Samples that are measured for density are prepared according to ASTM D4703. Measurements are made within one hour of sample pressing using ASTM D792, Method B.

Melt Index

Melt index, or $I_{2.16}$, for ethylene-based polymers is determined according to ASTM D1238 at 190°C, 2.16 kg. High load melt index or Flow Index, or $I_{21.6}$, for ethylene-based polymers is determined according to ASTM D1238 at 190°C, 21.6 kg.

Gel Permeation Chromatography (GPC) Molecular Weight Determination

Polymer molecular weight is characterized by high temperature gel permeation chromatography (GPC). The chromatographic system consists of a Polymer Laboratories "GPC-220 high temperature" chromatograph, equipped with a Precision Detectors (Amherst, Mass.) 2-angle laser light scattering detector, Model 2040, and a 4-capillary differential viscometer detector, Model 210R, from Viscotek (Houston, Tex.). The 15° angle of the light scattering detector is used for calculation purposes.

Data collection is performed using PolymerChar (Valencia, Spain) GPC One Instrument Control. The system is equipped with an on-line solvent degas device from Polymer Laboratories. The carousel compartment and column compartment are operated at 150°C. The columns are four Polymer Laboratories "Mixed A" 20 micron columns, and one 20um guard column. The polymer solutions are prepared in 1,2,4 trichlorobenzene (TCB). The samples are prepared at a concentration of 0.1 grams of polymer in 50 ml of solvent. The chromatographic solvent and the sample preparation solvent contain 200 ppm of butylated hydroxytoluene (BHT). Both solvent sources are nitrogen sparged. Polyethylene samples are stirred gently at 160°C for 4 hours. The injection volume is 200 $\mu$l, and the flow rate is 1.0 ml/minute.

Calibration of the GPC column set is performed with 21 narrow molecular weight distribution polystyrene standards. The molecular weights of the standards range from 580 to 8,400,000, and are arranged in 6 "cocktail" mixtures, with at least a decade of separation between individual molecular weights. The polystyrene standard peak molecular weights are converted to polyethylene molecular weights using the following equation (as described in Williams and Ward, J. Polym. Sci., Polym. Let., 6, 621 (1968)):

$$M_{polyethylene} = A \ x \ \left( M_{polystyrene} \right)^{B},$$

where M is the molecular weight, A has a value of 0.4316, and B is equal to 1.0.

A fifth order polynomial is used to fit the respective polyethylene-equivalent calibration points. The total plate count of the GPC column set is performed with Eicosane (prepared at 0.04 g in 50 milliliters of TCB, and dissolved for 20 minutes with gentle agitation.) The plate count and symmetry are measured on a 200 microliter injection according to the following equations:

$$PlateCount = 5.54 * \left( \frac{\text{RV at Peak Maximum}}{\text{Peak Width at ½ height}} \right)^{2}$$

where RV is the retention volume in milliliters, and the peak width is in milliliters.

$$Symmetry = \frac{\left( Rear \ Peak \ Width \ at \ \frac{1}{10} \ height \right) - \left( RV \ at \ Peak \ Maximum \right)}{\left( RV \ at \ Peak \ Maximum \right) - \left( Front \ Peak \ Width \ at \ \frac{1}{10} \ height \right)},$$

where RV is the retention volume in milliliters, and the peak width is in milliliters.

The calculations of Mn, Mw, and Mz are based on GPC results using the RI detector are determined from the following equations:

$$\overline{Mn} = \frac{\sum^i RI_i}{\sum^i (RI_i/Mcalibration_i)},$$

$$\overline{Mw} = \frac{\sum^i (RI_i * Mcal_i)}{\sum^i (RI_i)},$$

$$\overline{Mz} = \frac{\sum^i (RI_i * Mcal_i)^2}{\sum^i (RI_i * Mcal_i)}$$

In order to monitor the deviations over time, which may contain an elution component (caused by chromatographic changes) and a flow rate component (caused by pump changes), a late eluting narrow peak is generally used as a "marker peak". A flow rate marker is therefore established based on decane flow marker dissolved in the eluting sample. This flow rate marker is used to linearly correct the flow rate for all samples by alignment of the decane peaks. Any changes in the time of the marker peak are then assumed to be related to a linear shift in both flow rate and chromatographic slope. The preferred column set is of 20 micron particle size and "mixed" porosity to adequately separate the highest molecular weight fractions appropriate to the claims. The plate count for the chromatographic system (based on eicosane as discussed previously) should be greater than 20,000, and symmetry should be between 1.00 and 1.12.

Shrinkage Anisotropy

HDPE formulations are compounded in a twin screw extruder (TSE) (model: Coperion ZSK 18 MEGAlab), a high speed (maximum: 1200 RPM), high torque (maximum specific torque: 18 Nm/cm$^3$) 18 mm co-rotating TSE, with L/D = 40 and Do/Di = 1.55. The processing conditions used are provided in Table 1. The compounded material is injection molded in a 100-ton injection molding machine (model: Sodick GL100A), following ISO 294-4:2018 standard, and using the conditions provided in Table 2.

**Table 1: Processing conditions used in twin screw extruder for compounding**

| Zone 1 temperature (°C) | 175 |
|---|---|
| Zone 2 temperature (°C) | 210 |
| Remaining Zone Temperatures (°C) | 220 |
| Screw speed (RPM) | 300 |
| Feed Rate (lbs/hr) | 10 |

**Table 2: Processing Conditions Used in the Injection Molding Machine.**

| Feed Rate (lbs/hr) | 10 |
|---|---|
| Zone Z0 temperature (°C) | 225 |
| Remaining zone temperatures (°C) | 220 |
| Injection velocity (cc/s) | 35 |
| Hold time (s) | 15 |
| Shot size (cc) | 42 |
| Mold temperature (°C) | 21 |
| Cooling time (s) | 25 |

The plates fabricated are measured for quantifying total shrinkage in the directions parallel to the melt flow ($MD_{shrinkage}$) and normal to the melt flow direction ($TD_{shrinkage}$), following ISO 294-4: 2018 standard.

The shrinkage anisotropy is calculated as follows:

Eq. 1
$$Shrinkage\ Anisotropy = \frac{Total\ shrinkage\ in\ the\ Machine\ Direction}{Total\ shrinakge\ in\ the\ Transverse\ Direction}$$

## EXAMPLES

The embodiments described herein may be further illustrated by the following nonlimiting examples.

Resins

**Table 2: Resins Used in Examples**

| | | $I_{2.16}$ (g/10 min) | $I_{21.6}$ (g/10 min) | Density (g/cm$^3$) | Mw/Mn | Mw (kg/mol) | Mn (kg/mol) |
|---|---|---|---|---|---|---|---|
| LMW1 | DMDA 8940, available from The Dow Chemical Company, which is an ethylene/alpha-olefin copolymer | 40.0 | | 0.950 | 4.0 | 45.5 | 11.3 |
| HMW1 | DMDA 6400, available from The Dow Chemical Company, which is an ethylene/alpha-olefin copolymer | 0.8 | 61 | 0.960 | 8.1 | 126.9 | 15.6 |
| HMW2 | DOWLEX™ 2047G, available from The Dow Chemical Company, which is an ethylene/alpha-olefin copolymer | 2.3 | | 0.917 | 3.9 | 92.7 | 23.5 |
| HMW3 | ethylene/alpha-olefin copolymer | 2.7 | 65 | 0.952 | 4.2 | 101 | 24.0 |
| HMW4 | ethylene/alpha-olefin copolymer | 0.1 | 4 | 0.910 | 4.8 | 235 | 48.6 |
| HMW5 | ethylene/alpha-olefin copolymer | 0.5 | 18 | 0.910 | 4.8 | 159 | 32.9 |

**Table 3 - Process Conditions for HMW Resins 3, 4, & 5**

| | HMW3 | HMW4 | HMW5 |
|---|---|---|---|
| Catalyst | UCAT™ J | UCAT™ J | UCAT™ J |
| Temperature, °C | 100 | 72 | 72 |
| Pressure, psig | 300 | 350 | 350 |
| C2 Partial Pressure, psi | 115 | 70 | 70 |
| H2/C2 Molar Ratio | 0.28 | 0.01 | 0.01 |
| C6/C2 Molar Ratio | 0.012 | 0.17 | 0.17 |
| IC5% | 10.08 | 0 | 0 |
| Cat Feed Rate, cc/hr | 2.1 | 8 | 8 |
| Cocatalyst | 1 wt.% TEAL | 2.5 wt.% TEAL | 2.5 wt.% TEAL |
| Cocat. Feed Rate, cc/hr | 220 | 200 | 200 |
| Production Rate, lb/hr | 30 to 40 | 50 to 60 | 50 to 60 |
| Bed Weight, lbs | 124 | 100 | 100 |

**Table 4 - Inventive and Comparative Polyethylene Compositions**

| | Wt.% HMW resin | HMW Resin | LMW Resin | Machine Direction Shrinkage (%) | Transverse Direction Shrinkage (%) | Shrinkage Anisotropy | Estimated $I_{2.16}$ (g/10 min) | Calculated Density (g/cm$^3$) |
|---|---|---|---|---|---|---|---|---|
| CE1 | 0 | N/A | LMW1 | 1.73 | 1.46 | 1.19 | 40.0* | 0.950* |
| IE1 | 2 | HMW1 | LMW1 | 1.91 | 1.88 | 1.02 | 35.0 | 0.950 |
| IE2 | 4 | HMW1 | LMW1 | 1.83 | 1.98 | 0.92 | 30.8 | 0.950 |
| IE3 | 6 | HMW1 | LMW1 | 1.82 | 2.05 | 0.89 | 27.2 | 0.951 |
| IE4 | 8 | HMW1 | LMW1 | 1.77 | 2.09 | 0.85 | 24.1 | 0.951 |
| IES | 10 | HMW1 | LMW1 | 1.78 | 2.13 | 0.83 | 21.5 | 0.951 |
| IE6 | 15 | HMW1 | LMW1 | 1.85 | 2.12 | 0.87 | 16.3 | 0.951 |
| IE7 | 20 | HMW1 | LMW1 | 1.93 | 2.10 | 0.92 | 12.6 | 0.952 |
| IE8 | 25 | HMW1 | LMW1 | 2.11 | 2.03 | 1.03 | 9.9 | 0.952 |
| CE2 | 30 | HMW1 | LMW1 | 2.30 | 1.88 | 1.23 | 7.8 | 0.953 |
| CE3 | 35 | HMW1 | LMW1 | 2.54 | 1.71 | 1.49 | 6.3 | 0.953 |
| CE4 | 100 | HMW1 | N/A | 4.00 | 1.11 | 3.59 | 0.8* | 0.960* |
| CE5 | 10 | HMW2 | LMW1 | 2.00 | 1.58 | 1.27 | 26.8 | 0.947 |
| CE6 | 10 | HMW3 | LMW1 | 1.90 | 1.53 | 1.24 | 27.6 | 0.950 |
| CE7 | 10 | HMW4 | LMW1 | 1.78 | 1.43 | 1.24 | 11.9 | 0.946 |
| CE8 | 10 | HMW5 | LMW1 | 1.85 | 1.53 | 1.21 | 19.1 | 0.946 |
| * actual measured values are provided instead of the estimated or calculated values. | | | | | | | | |

As depicted in Table 5, the results demonstrate the inventive compositions exhibit improved anisotropic shrinkage balance, particularly, at a lower melt index (I2) relative to the pure base resin (CE1) where better physical properties are achieved. Surprisingly, the particular high molecular weight component defined by the claims allows for this improvement.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, if any, including any cross- referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

**Claims**

1. A polyethylene composition suitable for use in injection molding, the polyethylene composition comprising:

from 2 wt.% to 25 wt.% of a high molecular weight component consisting of an ethylene/alpha-olefin copolymer, wherein the high molecular weight component has a density of from 0.910 g/cc to 0.971 g/cc, a melt index ($I_{2.16}$) of greater than 0.5 g/10 min to less than 1.5 g/10 min, a molecular weight distribution (Mw/Mn) of 6.0 to 20.0; from 75 wt.% to 98 wt.% a low molecular weight component consisting of an ethylene homopolymer or an ethylene/alpha-olefin copolymer, wherein the ethylene homopolymer or an ethylene/alpha-olefin copolymer has a density from 0.920 g/cc to 0.971 g/cc, a melt index ($I_{2.16}$) from 5.0 g/10 min to 120 g/10 min, and a molecular weight distribution (Mw/Mn) of less than 6.0; wherein the polyethylene composition has a shrinkage anisotropy ($MD_{Shrink}/TD_{Shrink}$) that is less than a shrinkage anisotropy ($MD_{shrink}/TD_{shrink}$) of the low molecular weight component, wherein $MD_{shrink}$ is the machine direction total shrinkage and $TD_{shrink}$ is the transverse direction total shrinkage; wherein melt index ($I_{2.16}$) is determined according to ASTM D1238 at 190°C, 2.16 kg.

2. The polyethylene composition of claim 1, wherein the high molecular weight component has a number average molecular weight, Mn, of greater than 11,000 g/mol, as determined by conventional gel permeation chromatography.

3. The polyethylene composition of claims 1 or 2, wherein the high molecular weight component has a high load melt index ($I_{21.6}$) from 45 g/10 min to 90 g/10 min, wherein high load melt index ($I_{21.6}$) is determined according to ASTM D1238 at 190°C, 21.6 kg.

4. The polyethylene composition of claims 1-3, wherein the high molecular weight component has a weight average molecular weight, Mw, of from 90,000 g/mol to less than 175,000 g/mol, as determined by conventional gel permeation chromatography.

5. The polyethylene composition of claims 1-4, wherein the low molecular weight component has a number average molecular weight, Mn, of less than 11,000 g/mol, as determined by conventional gel permeation chromatography.

6. The polyethylene composition of claims 1-5, wherein the low molecular weight component has a weight average molecular weight, Mw, of less than 90,000 g/mol, as determined by conventional gel permeation chromatography.

7. The polyethylene composition of claims 1-6, wherein the overall density of the polyethylene composition is 0.930 g/cc to 0.967 g/cc.

8. The polyethylene composition of claims 1-7, wherein the overall melt index ($I_{2.16}$) of the polyethylene composition is 2.0 g/10 min to 115 g/ 10 min, wherein the melt index is determined according to ASTM D1238 at 190°C, 2.16 kg.

9. The polyethylene composition of claim 8, wherein the shrinkage anisotropy ($MD_{shrink}/TD_{shrink}$) of the polyethylene composition is at least 0.10 less than the shrinkage anisotropy ($MD_{shrink}/TD_{shrink}$) of the low molecular weight component.

10. An injection molded article formed from the polyethylene composition of claim 1.

11. A closure formed from the polyethylene composition of claim 1.

**Patentansprüche**

1. Polyethylenzusammensetzung, die für eine Verwendung bei einem Spritzgießen geeignet ist, die Polyethylenzusammensetzung umfassend:

von zu 2 Gew.-% bis 25 Gew.-% eine Komponente mit hohem Molekulargewicht, bestehend aus einem Ethylen/Alpha-Olefin-Copolymer, wobei die Komponente mit hohem Molekulargewicht eine Dichte von 0,910 g/cc bis 0,971 g/cc, einen Schmelzindex ($I_{2,16}$) von mehr als 0,5 g/10 min bis weniger als 1,5 g/10 min, eine Molekulargewichtsverteilung (Mw/Mn) von 6,0 bis 20,0 aufweist; von zu 75 Gew.-% bis 98 Gew.-% eine Komponente mit niedrigem Molekulargewicht, bestehend aus einem Ethylenhomopolymer oder einem Ethylen/Alpha-Olefin-Copolymer, wobei das Ethylenhomopolymer oder das Ethylen/Alpha-Olefin-Copolymer eine Dichte von 0,920 g/cc bis 0,971 g/cc, einen Schmelzindex ($I_{2,16}$) von 5,0 g/10 min bis 120 g/10 min und eine Molekulargewichtsverteilung (Mw/Mn) von weniger als 6,0 aufweist; wobei die Polyethylenzusammensetzung eine Schrumpfungsanisotropie ($MD_{schrumpfen}/TD_{schrumpfen}$) aufweist, die kleiner als eine Schrumpfungsanisotropie ($MD_{schrumpfen}$/$TD_{schrumpfen}$) der Komponente mit hohem Molekulargewicht ist, wobei $MD_{schrumpfen}$ die Gesamtschrumpfung in einer Maschinenrichtung ist und $TD_{schrumpfen}$ die Gesamtschrumpfung in einer Querrichtung ist;
wobei der Schmelzindex ($I_{2,16}$) gemäß ASTM D1238 bei 190 °C, 2,16 kg gemessen wird.

**2.** Polyethylenzusammensetzung nach Anspruch 1, wobei die Komponente mit hohem Molekulargewicht ein zahlenmittleres des Molekulargewicht, Mn, von mehr als 11.000 g/mol aufweist, wie durch herkömmliche Gelpermeationschromatographie bestimmt.

**3.** Polyethylenzusammensetzung nach Anspruch 1 oder 2, wobei die Komponente mit hohem Molekulargewicht einen Schmelzindex ($I_{21,6}$) bei hoher Last von 45 g/10 min bis 90 g/10 min aufweist, wobei der Schmelzindex ($I_{21,6}$) bei hoher Last gemäß ASTM D1238 bei 190 °C, 21,6 kg bestimmt wird.

**4.** Polyethylenzusammensetzung nach den Ansprüchen 1 bis 3, wobei die Komponente mit hohem Molekulargewicht ein Massenmittel Mw von 90.000 g/mol bis weniger als 175.000 g/mol aufweist, wie durch herkömmliche Gelpermeationschromatographie bestimmt.

**5.** Polyethylenzusammensetzung nach den Ansprüchen 1 bis 4, wobei die Komponente mit niedrigem Molekulargewicht ein zahlenmittleres Molekulargewicht Mn von weniger als 11.000 g/mol aufweist, wie durch herkömmliche Gelpermeationschromatographie bestimmt.

**6.** Polyethylenzusammensetzung nach den Ansprüchen 1 bis 5, wobei die Komponente mit niedrigem Molekulargewicht ein Massenmittel Mw von weniger als 90.000 g/mol aufweist, wie durch herkömmliche Gelpermeationschromatographie bestimmt.

**7.** Polyethylenzusammensetzung nach den Ansprüchen 1 bis 6, wobei die Gesamtdichte der Polyethylenzusammensetzung 0,930 g/cc bis 0,967 g/cc beträgt.

**8.** Polyethylenzusammensetzung nach den Ansprüchen 1 bis 7, wobei der Gesamtschmelzindex ($I_{2,16}$) der Polyethylenzusammensetzung 2,0 g/10 min bis 115 g/10 min beträgt, wobei der Schmelzindex gemäß ASTM D1238 bei 190 °C, 2,16 kg bestimmt wird.

**9.** Polyethylenzusammensetzung nach Anspruch 8, wobei die Schrumpfungsanisotropie ($MD_{schrumpfen}$/$TD_{schrumpfen}$) der Polyethylenzusammensetzung mindestens 0,10 kleiner als die Schrumpfungsanisotropie ($MD_{schrumpfen}$/$TD_{schrumpfen}$) der Komponente mit niedrigem Molekulargewicht ist.

**10.** Spritzgusserzeugnis, das aus der Polyethylenzusammensetzung nach Anspruch 1 ausgebildet ist.

**11.** Verschluss, der aus der Polyethylenzusammensetzung nach Anspruch 1 ausgebildet ist.

**Revendications**

**1.** Composition de polyéthylène utilisable pour le moulage par injection, la composition de polyéthylène comprenant :

de 2 % en poids à 25 % en poids d'un composant à haut poids moléculaire constitué d'un copolymère éthylène/alpha-oléfine, dans laquelle le composant à haut poids moléculaire a une densité de 0,910 g/cc à 0,971 g/cc, un indice de fusion ($I_{2,16}$) de plus de 0,5 g/10 min à moins de 1,5 g/10 min, une distribution de poids moléculaire (Mw/Mn) de 6,0 à 20,0 ;
de 75 % en poids à 98 % en poids d'un composant de faible poids moléculaire constitué d'un homopolymère d'éthylène ou d'un copolymère d'éthylène/alpha-oléfine, dans laquelle l'homopolymère d'éthylène ou le copolymère d'éthylène/alpha-oléfine a une densité de 0,920 g/cc à 0,971 g/cc, un indice de fusion ($I_{2,16}$) de 5,0 g/10 min à 120 g/10 min, et une distribution de poids moléculaire (Mw/Mn) de moins de 6,0 ;
dans laquelle la composition de polyéthylène a une anisotropie de retrait ($MD_{shrink}$/$TD_{shrink}$) inférieure à l'anisotropie de retrait ($MD_{shrink}$/$TD_{shrink}$) du composant de faible poids moléculaire, dans laquelle $MD_{shrink}$ est le retrait total dans le sens de machine et $TD_{shrink}$ est le retrait total dans le sens transversal ;
dans laquelle l'indice de fusion ($I_{2,16}$) est déterminé conformément à la norme ASTM D1238 à 190 °C à 2,16 kg.

**2.** Composition de polyéthylène selon la revendication 1, dans laquelle le composant à haut poids moléculaire a un poids moléculaire moyen en nombre, Mn, supérieur à 11 000 g/mol, tel que déterminé par chromatographie de perméation de gel conventionnelle.

**3.** Composition de polyéthylène selon les revendications 1 ou 2, dans laquelle le composant à haut poids moléculaire a un indice de fusion à charge élevée ($I_{21,6}$) de 45 g/10 min à 90 g/10 min, dans laquelle l'indice de fusion à charge élevée ($I_{21,6}$) est déterminé selon la norme ASTM D1238 à 190 °C, à 21,6 kg.

**4.** Composition de polyéthylène selon les revendications 1 à 3, dans laquelle le composant à haut poids moléculaire a un poids moléculaire moyen en poids, Mw, de 90 000 g/mol à moins de 175 000 g/mol, tel que déterminé par chromatographie de perméation de gel conventionnelle.

**5.** Composition de polyéthylène selon les revendications 1 à 4, dans laquelle le composant de faible poids moléculaire a un poids moléculaire moyen en nombre, Mn, inférieur à 11 000 g/mol, tel que déterminé par chromatographie de perméation de gel conventionnelle.

**6.** Composition de polyéthylène selon les revendications 1 à 5, dans laquelle le composant de faible poids moléculaire a un poids moléculaire moyen en poids, Mw, inférieur à 90 000 g/mol, tel que déterminé par chromatographie de perméation de gel conventionnelle.

**7.** Composition de polyéthylène selon les revendications 1 à 6, dans laquelle la densité globale de la composition de polyéthylène est comprise entre 0,930 g/cc et 0,967 g/cc.

**8.** Composition de polyéthylène selon les revendications 1 à 7, dans laquelle l'indice de fusion global ($I_{2,16}$) de la composition de polyéthylène est compris entre 2,0 g/10 min et 115 g/ 10 min, dans laquelle l'indice de fusion est déterminé selon la norme ASTM D1238 à 190 °C, à 2,16 kg.

**9.** Composition de polyéthylène selon la revendication 8, dans laquelle l'anisotropie de retrait ($MD_{shrink}/TD_{shrink}$) de la composition de polyéthylène est inférieure d'au moins 0,10 à l'anisotropie de retrait ($MD_{shrink}/TD_{shrink}$) du composant de faible poids moléculaire.

**10.** Article moulé par injection formé à partir de la composition de polyéthylène selon la revendication 1.

**11.** Fermeture formée à partir de la composition de polyéthylène selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2931807 A1
- WO 2004101674 A
- US 4011382 A
- US 2825721 A
- US 3622521 A
- US 4302565 A
- US 4482687 A
- US 4508842 A
- US 4990479 A
- US 5122494 A
- US 5290745 A
- US 6187866 B

**Non-patent literature cited in the description**

- **WILLIAMS ; WARD.** *J. Polym. Sci., Polym. Let.,* 1968, vol. 6, 621